# EUROPEAN PATENT SPECIFICATION

(11) **EP 3 415 364 B1**
(45) Date of publication and mention of the grant of the patent: **05.08.2020**
(21) Application number: 17001025.0
(22) Date of filing: 16.06.2017
(51) Int. Cl.: B60P 3/00, B62D 63/08

(54) **TRAILER VEHICLE**
ANHÄNGERFAHRZEUG
VÉHICULE À REMORQUE

(43) Date of publication of application: 19.12.2018
(73) Proprietor: WABCO Europe BVBA, 1170 Brüssel (BE)
(72) Inventor: Van Raemdonck, Gandert Marcel Rita, 2611 PW Delft (NL); Veldhuizen, Roy, 3023HH Rotterdam (NL)
(74) Representative: Koschnitzki, Thomas

(56) References cited:
- US-A- 3 240 408
- US-A- 4 878 605
- US-A- 5 125 710
- US-A- 5 310 303
- US-A1- 2003 123 965

## Description

The invention relates to a trailer vehicle to be used in a vehicle combination.

The trailer vehicle can be a semi-trailer comprising at least one axle, or a drawbar trailer comprising two or more axles.

The cargo-space or cargo-area of trailers is limited. Further, sometimes additional pallets are necessary to load the freight to be transported first onto the pallets and afterwards the laden pallets into the cargo-space of the trailer.

For this purpose pallet boxes are known for storing pallets to be used on demand. These pallet boxes are mounted beneath the vehicle structure of the trailer, in particular in front of the axle or rear axle of the trailer.

### Einschub zum Stand der Technik

The documents US 5,310,303 and US 5,125,710 disclose underslung cargo container systems for vehicles.

However, in case of undefined undersides of the vehicle structure it is often problematic to mount such a pallet box. Further the aerodynamic characteristics of a trailer vehicle with an additional pallet box can be problematic.

Therefore it is an object of the invention to provide a trailer vehicle comprising beneficial aerodynamic characteristics with low effort.

This object is realized by the trailer vehicle according claim 1. The sub claims refer to preferred embodiments.

According to the invention spacing means, in particular spacing beams, are provided at the underside of the vehicle structure and enable a defined mounting and fixing of the container box at the vehicle structure. Thus the container box is preferably mounted at the underside of the spacing means, preferably only at the underside of the spacing means. The spacing means

are preferably provided completely between the underside of the vehicle structure and a top side of the container box.

These spacing beams beneath the vehicle structure extend preferably in parallel and into longitudinal direction. The spacing beams therefore define a mounting space between the container box and the vehicle structure. However, this mounting space extending in vertical direction is open to the surrounding area by gaps, which lead to disadvantageous aerodynamic characteristics, since the airflow can enter the gaps and pass into the mounting space, thereby creating turbulences and an enhanced air resistance or an aerodynamic drag at the gaps and behind the gaps.

Thus the invention proposes to seal the gaps by means of a sealing equipment. The sealing equipment is preferably realized by a set of sealing strips to be mounted to the vehicle structure, to the sidewalls of the vehicle and/or to the outer surfaces of the container box.

Thus the sealing strips of the sealing equipment extend along the gaps an cover these gaps thereby preventing any air entrance into the mounting space in an effective manner.

The sealing equipment may be realized by sealing strips to be manufactured easily on basis of a plastic foil, rubber or metal sheet, and additional fixation means to fix the sealing strips at the structure and/or the container box.

Fixing or mounting the container box to the underside of the vehicle structure by means of two spacing beams, in particular steel beams extending in longitudinal direction is easy to realize. The steel beams can comprise a cross-section of the capital letter I (so-called I-beams or double-T-beams), thereby comprising an upper flange to be attached to the underside of the vehicle structure, a lower flange for receiving the top face of the container box, and a middle strut or middle bar connecting the two flanges. Those steel beams are often use in construction systems and therefore they are available as semi-manufactured or half-finished products.

Using two parallel spacing beams results in a separation of the mounting space into three compartments, which results in eight outer gaps at the outer faces of the container box. These eight gaps can be sealed partially or in total by the sealing equipment.

In particular the two large side gaps beneath the side wall of the trailer vehicle can be easily sealed, since the sidewalls of the vehicle structure and the sidewalls of the container box are good accessible for fixing the sealing equipment. Further the air stream or air flow is high at these side faces and therefore, the sealing may result in an effective reduction of the air turbulences.

### Brief description of the drawings:

- Fig. 1: a side view of a vehicle combination with a trailer vehicle according to one embodiment of the invention;
- Fig. 2: a perspective view of an arrangement according to the invention;
- Fig. 3: a cross-section of the spacing beam;
- Fig. 4: a top view of the mounting space and the spacing beams.

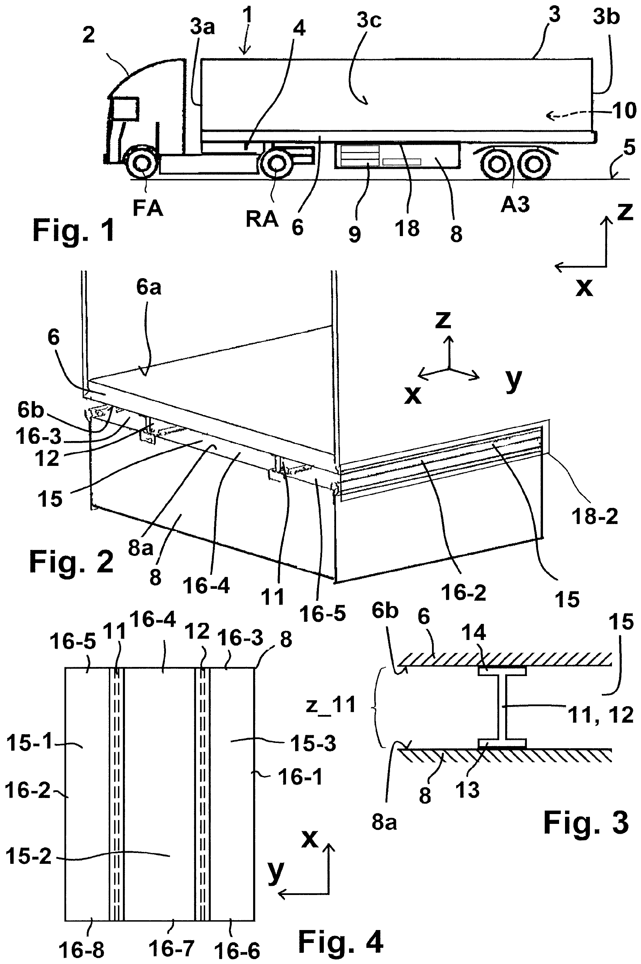

A vehicle combination 1 comprises a towing vehicle 2 and a trailer vehicle 3; in this embodiment the trailer vehicle 3 is a semi-trailer, which is connected to the towing vehicle 2 by a king pin 4 pivoted in a bearing of the towing vehicle 2, which king pin 4 defines the yaw axis. However, the trailer vehicle can also be a drawbar-trailer. The towing vehicle 2 comprises a front axle FA and a rear axle RA; the trailer 3 comprises at least one axle; fig. 1 depicts an example with a twin axle A3.

The trailer vehicle 3 comprises a vehicle structure 6 extending from its front end 3a to its rear end 3b, which vehicle structure 6 carries the king pin 4.

A container box, in particular a pallet box 8, is mounted at the bottom side 6b of the vehicle structure 6, i.e. under or beneath the vehicle structure 6. The container box 8 can be used as additional storage, in particular for storing pallets 9 to be used for loading goods onto these pallets 9 and store the laden pallets 9 into the cargo hold 10 of the trailer 3.

Fig. 2 depicts a perspective front view of the trailer vehicle 3; the container box 8 is of rectangular block shape; thus pallets 9, for example wooden pallets according to the European standard EN 13698-1 (EUR-pallets) can be placed in the container box 8 very effectively and space-saving.

At the bottom side 6b of the vehicle structure 6 two steel beams 11 and 12 are mounted. The steel beams 11 and 12 are spaced apart in transversal direction (y-direction) and run in longitudinal direction (x-direction); thus the two steel beams 11 and 12 run in parallel beneath the vehicle structure 6 of the trailer vehicle 3. The cross-section of the steel beams 11, 12 is preferably of I-shape (double-T-shape), thereby comprising an upper flange 14 mounted onto the bottom side 6b of the vehicle structure 6 and a lower flange 13 for attaching the container box 8, further a middle bar 17 connecting the flanges 13, 14. Mounting and attaching of the steel beams 11, 12 to the vehicle structure 6 and the container box 8 to the steel beams 11, 12 can be realized by screws or welding, for example.

Thus the steel beams 11, 12 provide a rigid steel structure for receiving the rectangular container box 8. A mounting space 15 is defined by this steel beams 11, 12. The mounting space 15 extends in vertical direction (z-direction) from the top face 8a of the container box 8 to the bottom side 6b of the vehicle structure 6; in longitudinal direction (x-direction) and lateral direction (y-direction) the mounting space 15 is defined by the size of the container box 8. Thus the longitudinal and lateral size of the mounting space 15 is equal to the container box 8, and its vertical size is defined by the vertical height z_11 of the steel beams 11, 12. The mounting space 15 is separated by the steels beams 11, 12 into three compartments 15-1, 15-2, 15-3, wherein the middle compartment 15-2 is located between the steel beams 11, 12, and the outer compartments 15-1 and 15-3 extend to the side faces of the container box 8 and/or the sidewalls 6c of the vehicle trailer 3. Thus the three compartments 15-1, 15-2, 15-3 are open to the environment in eight gaps 16-i, i= 1 to 8, with two side gaps 16-1, 16-2, three front gaps 16-3, 16-4, 16-5 and three end gaps 16-6, 16-7, 16-8.

A sealing equipment 18 is provided for sealing all gaps 16-i, i= 1 to 8 or some of them. In this embodiment the sealing equipment 18 is realized by several strips 18-i made of plastic material, rubber material or metal. The strips 18-1, 18-2, 18-3 comprise a width larger than the vertical height z_11 of mounting space 15, in order to be fixed at least to the vehicle structure 6 and to cover the complete gaps 16-I, respectively. The mounting space 15 may be sealed at one face, for example at its front face, or at two faces, for example the front face and rear face or its two side faces, or completely.

The sealing strips 18-1, 18-2, 18-3 can be fixed at their top ends to the vehicle structure 6, at their bottom ends to the container box 8 or at both ends. In Fig. 2 only the sealing strip 18-2 is visible.

Thus airflow through the closed or covered gaps 16-i into and through the mounting space 15 is prevented; further air turbulences at the closed gaps are prevented or prohibited.

According to one embodiment only the longer side gaps 16-1 and 16-2 extending into longitudinal direction (x-direction) are closed by the sealing strips 18-1 and 18-2. According to a second embodiment the side gaps 16-1, 16-2 and the three front gaps 16-3, 16-4 and 16-5 are closed, leaving the rear gaps 16-6, 16-7 and 16-8 open. According to a third embodiment only the front gaps 16-3, 16-4 and 16-5 are closed by sealing strips. According to a fourth embodiment all gaps 16-i are closed.

The sealing strips 18-i can be fixed to the vehicle structure 6 or the sidewalls 3c by mechanical fix means like screws, bolts or clamping mechanism; further the sealing strips 18-I can be fixed by adhesive means, for example by a self-adhesive layer on one face of the sealing strips. The sealing strips with such a self-adhesive layer can be mounted easily at the sidewalls 3c or the vehicle structure 6 by attaching and pressing them in the desired position.

The three front gaps 16-3, 16-4, 16-5, and/or the three rear gaps 16-6, 16-7, 16-8 can be closed by one common lateral sealing strip 16-1, 16-2, 16-3 and 16-5, 16-6, 16-7, respectively.

The material of the sealing strips 18-i can in particular be chosen as a plastic material of a consistence stiff or rigid enough providing sufficient stiffness against aerodynamic forces, but flexible enough to enable an easy fixation to the sidewalls 3c and/or the vehicle structure 6.

The container box 8 may have an access or door at one side face, for example the left side face; this access or door is not blocked or impeded by the sealing equipment 18. In particular the sealing strips 18-i at the side walls can be attached only at the vehicle structure 6 or the side faces 3b of the trailer vehicle 3, but not at the container box 8 in order to allow opening and closing of the door.

In case of an drawbar-trailer with a trailer front axle and a trailer rear axle the container box is preferably provided between the axles.

### List of reference numerals (Part of description)

- 1: vehicle combination
- 2: towing vehicle
- 3: trailer vehicle
- 3a: front end
- 3b: rear end
- 3c: sidewall

- 4: king pin
- 5: driving surface, road
- 6: vehicle structure
- 6b: bottom side of the vehicle structure 6
- 6a: top side of the vehicle structure 6
- 6c: sidewall of the vehicle structure 6
- 8: container box
- 8a: top face of the container box 8
- 9: pallets
- 10: cargo hold of the trailer 3

- 11, 12: spacing beams, spacing means
- 13: lower flange
- 14: upper flange
- 15: mounting space
- 15-i, i=1 to 8: compartments of the mounting space 15
- 16-i, i=1 to 8: gaps of the mounting space 15
- 17: middle bar
- 18: sealing equipment
- 18-i, i=1 to 8: sealing strips of the sealing equipment 18

- FA: front axle
- RA: rear axle
- A3: trailer twin axle
- x: front direction
- y: lateral direction
- z: vertical direction
- z_11: vertical height of the mounting space 15

## Claims

1. Trailer vehicle (3), comprising:
a vehicle structure (6),
at least one axle (A3) positioned beneath an underside (6b) of said vehicle structure (6),
a container box (8) positioned beneath said vehicle structure (6) and fixed to said vehicle structure (6), said container box (8) being spaced apart from said at least one axle (A3) in a longitudinal direction (x),
wherein
at least two spacing means (11, 12) are mounted at said underside (6b) of said vehicle structure (6),
wherein said container box (8) is mounted at said spacing means (11, 12), thereby defining a mounting space (15) between said underside (6b) of said vehicle structure (6) and a top face (8a) of said container box (8), said mounting space (15) being open to an environment in at least four gaps (16-1, 16-2, 16-3, 16-4, 16-5, 16-6, 16-7, 16-8), **characterised in that** a sealing equipment (18) is provided for sealing at least one of said gaps (16-1, 16-2, 16-3, 16-4, 16-5, 16-6, 16-7, 16-8), wherein said sealing strips (18-2) are overlapping said vehicle structure (6) and said container box (8) in order to provide a tight sealing effect.

2. Trailer vehicle (3) according to claim 1,
wherein said sealing equipment (18) is mounted at sidewalls (3c) of said trailer vehicle (3) and/or at said vehicle structure (6), in particular an outer face of said vehicle structure (6), and/or at said container box (8),
for covering at least one gap of said gaps (16-1, 16-2, 16-3, 16-4, 16-5, 16-6, 16-7, 16-8).

3. Trailer vehicle (3) according to claim 1 or 2,
wherein said sealing equipment (18) comprises a set of sealing strips (18-2), each of said sealing strips being mounted at said vehicle structure (6) and/or sidewalls (3c) of the trailer vehicle (3) and/or said container box (8).

4. Trailer vehicle (3) according to one of the preceding claims, wherein said sealing equipment (18) is fixed to said vehicle structure (6) and/or said container box (8) by mechanical fixing means, e.g. screws or bolts, and/or by adhesive means.

5. Trailer vehicle (3) according to one of the preceding claims, wherein said sealing strips (18-2) are made of a rigid, flexible material, in particular one of the following materials: plastic material, rubber material, metal.

6. Trailer vehicle (3) according to one of the preceding claims, wherein said spacing means (11, 12) are realized by two spacing beams (11, 12) extending into a longitudinal direction (x) of said trailer vehicle (3), preferably in parallel.

7. Trailer vehicle (3) according to claim 6, wherein said mounting space (15) is separated by said two spacing beams (11, 12) into three compartments (15-1, 15-2, 15-3) thereby defining at least eight gaps, which are two side gaps (16-1, 16-2), three front gaps (16-3, 16-4, 16-5) and three rear gaps (16-6, 16-7, 16-8).

8. Trailer vehicle (3) according to claim 7, wherein said sealing equipment (18) covers one of the following gap combinations:
a) only the two side gaps (16-1, 16-2),
b) only the side gaps (16-1, 16-2) and the front gaps (16-3, 16-4, 16-5),
c) only the front gaps (16-3, 16-4, 16-5),
d) only the front gaps (16-3, 16-4, 16-5) and rear gaps (16-6, 16-7, 16-8),
e) all gaps (16-1, 16-2, 16-3, 16-4, 16-5, 16-6, 16-7, 16-8).

9. Trailer vehicle (3) according to one of the preceding claims, wherein said container box (8) comprises a rectangular form and/or square form.

10. Trailer vehicle (3) according to claim 9, wherein said container box (8) is provided as a pallet box for receiving a stack of pallets (9), in particular Eur-pallets (9) according to a European norm.

11. Trailer vehicle (3) according to one of the preceding claims, wherein
said container box (8) is mounted at said underside of said spacing means (11, 12), and
said spacing means (11, 12) are completely provided between said underside (6b) of said vehicle structure (6) and said container box (8).

12. Trailer vehicle (3) according to one of the preceding claims, wherein said vehicle structure (6) extends from a front end (3a) to a rear end (3d) of said trailer vehicle (3),

13. Vehicle combination (1) comprising a towing vehicle (2) and at least one trailer vehicle (3) according to one of the preceding claims, in particular a semi-trailer or a drawbar trailer.

## Patentansprüche

1. Anhängerfahrzeug (3), umfassend:
eine Fahrzeugstruktur (6),
zumindest eine Achse (A3), die unter einer Unterseite (6b) der Fahrzeugstruktur (6) positioniert ist,
einen Behälterkasten (8), der unter der Fahrzeugstruktur (6) positioniert und an der Fahrzeugstruktur (6) befestigt ist, wobei der Behälterkasten (8) in einer Längsrichtung (x) von der zumindest einen Achse (A3) beabstandet ist, wobei
an der Unterseite (6b) der Fahrzeugstruktur (6) zumindest zwei Abstandsmittel (11, 12) montiert sind, wobei der Behälterkasten (8) am Abstandsmittel (11, 12) montiert ist und dadurch einen Montageraum (15) zwischen der Unterseite (6b) der Fahrzeugstruktur (6) und einer Oberseite (8a) des Behälterkastens (8) definiert, wobei der Montageraum (15) in zumindest vier Spalten (16-1, 16-2, 16-3, 16-4, 16-5, 16-6, 16-7, 16-8) zu einer Umgebung hin offen ist,
**dadurch gekennzeichnet, dass**
eine Dichtungsausrüstung (18) zum Abdichten von zumindest einem der Spalte (16-1, 16-2, 16-3, 16-4, 16-5, 16-6, 16-7, 16-8) bereitgestellt ist, wobei die Dichtungsstreifen (18-2) die Fahrzeugstruktur (6) und den Behälterkasten (8) überlappen, um eine dichte Abdichtwirkung bereitzustellen.

2. Anhängerfahrzeug (3) nach Anspruch 1,
wobei die Dichtungsausrüstung (18) an Seitenwänden (3c) des Anhängerfahrzeugs (3) und/oder an der Fahrzeugstruktur (6), insbesondere an einer Außenseite Fahrzeugstruktur (6), und/oder am Behälterkasten (8) montiert ist,
um zumindest einen Spalt der Spalte (16-1, 16-2, 16-3, 16-4, 16-5, 16-6, 16-7, 16-8) abzudecken.

3. Anhängerfahrzeug (3) nach Anspruch 1 oder 2,
wobei die Dichtungsausrüstung (18) einen Satz Dichtungsstreifen (18-2) umfasst, wobei jeder der Dichtungsstreifen an der Fahrzeugstruktur (6) und/oder an Seitenwänden (3c) des Anhängerfahrzeugs (3) und/oder am Behälterkasten (8) montiert ist.

4. Anhängerfahrzeug (3) nach einem der vorangehenden Ansprüche, wobei die Dichtungsausrüstung (18) durch mechanische Befestigungsmittel, z. B. Schrauben oder Bolzen, und/oder durch Haftmittel an der Fahrzeugstruktur (6) und/oder am Behälterkasten (8) befestigt ist.

5. Anhängerfahrzeug (3) nach einem der vorangehenden Ansprüche, wobei die Dichtungsstreifen (18-2) aus einem festen, flexiblen Material gefertigt sind, insbesondere aus einem der folgenden Materialien: Kunststoffmaterial, Gummimaterial, Metall.

6. Anhängerfahrzeug (3) nach einem der vorangehenden Ansprüche, wobei die Abstandsmittel (11, 12) durch zwei Abstandsbalken (11, 12) ausgeführt sind, die sich vorzugsweise parallel in eine Längsrichtung (x) des Anhängerfahrzeug (3) erstrecken.

7. Anhängerfahrzeug (3) nach Anspruch 6, wobei der Montageraum (15) durch die beiden Abstandsbalken (11, 12) in drei Kammern (15-1, 15-2, 15-3) unterteilt ist und dadurch zumindest acht Spalte definiert, die zwei seitliche Spalte (16-1, 16-2), drei vordere Spalte (16-3, 16-4, 16-5) und drei hintere Spalte (16-6, 16-7, 16-8) sind.

8. Anhängerfahrzeug (3) nach Anspruch 7, wobei die Dichtungsausrüstung (18) eine der folgenden Spaltkombinationen abdeckt:
a) nur die beiden seitlichen Spalte (16-1, 16-2),
b) nur die seitlichen Spalte (16-1, 16-2) und die vorderen Spalte (16-3, 16-4, 16-5),
c) nur die vorderen Spalte (16-3, 16-4, 16-5),
d) nur die vorderen Spalte (16-3, 16-4, 16-5) und die hinteren Spalte (16-6, 16-7, 16-8),
e) alle Spalte (16-1, 16-2, 16-3, 16-4, 16-5, 16-6, 16-7, 16-8).

9. Anhängerfahrzeug (3) nach einem der vorangehenden Ansprüche, wobei der Behälterkasten (8) eine rechteckige Form und/oder eine quadratische Form umfasst.

10. Anhängerfahrzeug (3) nach Anspruch 9, wobei der Behälterkasten (8) als ein Palletenkasten zum Aufnehmen eines Stapels von Paletten (9), insbesondere Europaletten (9) nach einer europäischen Norm, bereitgestellt ist.

11. Anhängerfahrzeug (3) nach einem der vorangehenden Ansprüche, wobei
der Behälterkasten (8) an der Unterseite des Abstandsmittels (11, 12) montiert ist und
die Abstandsmittel (11, 12) vollständig zwischen der Unterseite (6b) der Fahrzeugstruktur (6) und dem Behälterkasten (8) bereitgestellt sind.

12. Anhängerfahrzeug (3) nach einem der vorangehenden Ansprüche, wobei sich die Fahrzeugstruktur (6) von einem vorderen Ende (3a) zu einem hinteren Ende (3d) des Anhängerfahrzeugs (3) erstreckt.

13. Fahrzeugkombination (1), umfassend ein Zugfahrzeug (2) und zumindest ein Anhängerfahrzeug (3) nach einem der vorangehenden Ansprüche, insbesondere einen Sattelanhänger oder einen Deichselanhänger.

## Revendications

1. Véhicule à remorque (3) comprenant :
une structure de véhicule (6),
au moins un essieu (A3) positionné sous un côté inférieur (6b) de ladite structure de véhicule (6),
une caisse (8) positionnée sous ladite structure de véhicule (6) et fixée à ladite structure de véhicule (6), ladite caisse (8) étant espacée dudit au moins un essieu (A3) dans une direction longitudinale (x),
dans lequel
au moins deux moyens d'espacement (11, 12) sont montés sur ledit côté inférieur (6b) de ladite structure de véhicule (6),
dans lequel ladite caisse (8) est montée sur lesdits moyens d'espacement (11, 12), définissant ainsi un espace de montage (15) entre ledit côté inférieur (6b) de ladite structure de véhicule (6) et une surface supérieure (8a) de ladite caisse (8), ledit espace de montage (15) étant ouvert sur un environnement en au moins quatre espaces (16-1, 16-2, 16-3, 16-4, 16-5, 16-6, 16-7, 16-8),
**caractérisé en ce qu'**un équipement de scellement (18) est prévu pour sceller au moins l'un desdits espaces (16-1, 16-2, 16-3, 16-4, 16-5, 16-6, 16-7, 16-8), dans lequel lesdites bandes de scellement (18-2) chevauchent ladite structure de véhicule (6) et ladite caisse (8) afin de produire un effet de scellement étanche.

2. Véhicule à remorque (3) selon la revendication 1,
dans lequel ledit équipement de scellement (18) est monté sur des parois latérales (3c) dudit véhicule à remorque (3) et/ou sur ladite structure de véhicule (6), en particulier sur une surface externe de ladite structure de véhicule (6), et/ou sur ladite caisse (8), pour recouvrir au moins un espace desdits espaces (16-1, 16-2, 16-3, 16-4, 16-5, 16-6, 16-7, 16-8).

3. Véhicule à remorque (3) selon la revendication 1 ou 2,
dans lequel ledit équipement de scellement (18) comprend un ensemble de bandes de scellement (18-2), chacune desdites bandes de scellement étant montée sur ladite structure de véhicule (6) et/ou sur les parois latérales (3c) du véhicule à remorque (3) et/ou sur ladite caisse (8).

4. Véhicule à remorque (3) selon l'une quelconque des revendications précédentes, dans lequel ledit équipement de scellement (18) est fixé à ladite structure de véhicule (6) et/ou à ladite caisse (8) par des moyens de fixation mécaniques, par exemple des vis ou des boulons, et/ou par des moyens adhésifs.

5. Véhicule à remorque (3) selon l'une quelconque des revendications précédentes, dans lequel lesdites bandes de scellement (18-2) sont constituées d'un matériau rigide flexible, en particulier l'un des matériaux suivants : un matériau plastique, un caoutchouc, un métal.

6. Véhicule à remorque (3) selon l'une quelconque des revendications précédentes, dans lequel lesdits moyens d'espacement (11, 12) sont réalisés au moyen de deux poutres d'espacement (11, 12) s'étendant dans une direction longitudinale (x) dudit véhicule à remorque (3), de préférence parallèlement.

7. Véhicule à remorque (3) selon la revendication 6, dans lequel ledit espace de montage (15) est séparé par lesdites deux poutres d'espacement (11, 12) en trois compartiments (15-1, 15-2, 15-3), définissant ainsi au moins huit espaces, c'est-à-dire deux espaces latéraux (16-1, 16-2), trois espaces avant (16-3, 16-4, 16-5) et trois espaces arrière (16-6, 16-7, 16-8).

8. Véhicule à remorque (3) selon la revendication 7, dans lequel ledit équipement de scellement (18) recouvre l'une des combinaisons d'espace suivantes :
a) seulement les deux espaces latéraux (16-1, 16-2),
b) seulement les deux espaces latéraux (16-1, 16-2) et les espaces avant (16-3, 16-4, 16-5),
c) seulement les espaces avant (16-3, 16-4, 16-5),
d) seulement les espaces avant (16-3, 16-4, 16-5) et les espaces arrière (16-6, 16-7, 16-8),
e) tous les espaces (16-1, 16-2, 16-3, 16-4, 16-5, 16-6, 16-7, 16-8).

9. Véhicule à remorque (3) selon l'une quelconque des revendications précédentes, dans lequel ladite caisse (8) présente une forme rectangulaire et/ou une forme carrée.

10. Véhicule à remorque (3) selon la revendication 9, dans lequel ladite caisse (8) est conçue en tant que caisse-palette destinée à recevoir une pile de palettes (9), en particulier des palettes européennes (9) conformes à une norme européenne.

11. Véhicule à remorque (3) selon l'une quelconque des revendications précédentes, dans lequel ladite caisse (8) est montée sur ledit côté inférieur desdits moyens d'espacement (11, 12), et
lesdits moyens d'espacement (11, 12) sont entièrement placés entre ledit côté inférieur (6b) de ladite structure de véhicule (6) et ladite caisse (8).

12. Véhicule à remorque (3) selon l'une quelconque des revendications précédentes, dans lequel ladite structure de véhicule (6) s'étend d'une extrémité avant (3a) à une extrémité arrière (3d) dudit véhicule à remorque (3).

13. Combinaison de véhicule (1) comprenant un véhicule tracteur (2) et au moins un véhicule à remorque (3) selon l'une quelconque des revendications précédentes, en particulier une semi-remorque ou une remorque à timon.
